(19) Europäisches Patentamt

European Patent Office

Office européen des brevets

(11) **EP 0 695 598 B1**

(12) **EUROPEAN PATENT SPECIFICATION**

(45) Date of publication and mention
of the grant of the patent:
**12.11.1997 Bulletin 1997/46**

(51) Int. Cl.$^6$: **B23K 20/04**, B21C 37/06

(21) Application number: **95304635.6**

(22) Date of filing: **03.07.1995**

(54) **Method of manufacturing dissimilar metal transition pipe joint**

Herstellungsverfahren von Durchgangsverbindungen zwischen Rohren aus verschiedenen Metallen

Méthode de fabrication de raccords de transition entre tubes en métaux différents

(84) Designated Contracting States:
**BE DE FR GB**

(30) Priority: **12.07.1994 JP 160188/94**

(43) Date of publication of application:
**07.02.1996 Bulletin 1996/06**

(73) Proprietor:
**DORYOKURO KAKUNENRYO KAIHATSU
JIGYODAN
Tokyo-to (JP)**

(72) Inventors:
• **Nakasuji, Kazuyuki
Hyogo-ken (JP)**
• **Ikenaga, Yoshiaki
Chiba-ken (JP)**
• **Takeda, Seiichiro
Ibaraki-ken (JP)**
• **Nagai, Takayuki
Ibaraki-ken (JP)**

(74) Representative:
**Charlton, Peter John
Elkington and Fife
Prospect House
8 Pembroke Road
Sevenoaks, Kent TN13 1XR (GB)**

(56) References cited:
**EP-A- 0 406 688          EP-A- 0 559 588**

• **PATENT ABSTRACTS OF JAPAN vol. 14 no. 428
(M-1025) ,14 September 1990 & JP-A-02 169191
(SUMITOMO METAL IND LTD ET AL.) 29 June
1990,**
• **PATENT ABSTRACTS OF JAPAN vol. 13 no. 274
(M-841) ,23 June 1989 & JP-A-01 071582
(HITACHI LTD ET AL.) 16 March 1989,**

## Description

This invention relates to a method of manufacturing a dissimilar metal transition pipe joint which is used to connect together tubular parts formed out of different kinds of metals.

In nuclear facilities, there is conventionally employed a connection of pipes formed out of different metals, e.g. connection of a pipe of a high corrosion-resistant stainless steel or a nickel-base alloy such as Inconel (name of a commercial product), and a pipe of pure zirconium or a zirconium alloy such as zircaloy (which will hereinafter be generally called a zirconium material) or pure titanium or a titanium alloy such as Ti-5%Ta (which will hereinafter be generally called a titanium material). Especially, the zirconium material and the titanium material have a high corrosion resistance and a very small thermal neutron absorption cross section, so that they are used as materials for a piping system in a strong acid liquid recovery apparatus, a nuclear reactor and the like.

On the other hand, in a piping system for a plant in which cryogenic substances such as LNG (liquefied nitrogen gas), LPG (liquefied petroleum gas) and the like are used, there is employed a connection of pipes formed out of different materials, such as a pipe of a stainless steel or a nickel-base alloy, and a pipe of aluminum or an aluminum alloy.

In order to meet the severe using condition of such a connection of pipes of different materials, improvements have been made on methods for connecting different kinds of metals. For example, methods for connecting pipes of different materials using a clad bonding method or a diffusion bonding method have been proposed in place of mechanical connecting methods using a flange joint or a screw joint. Regarding the clad bonding method, an explosive cladding method was proposed in Japanese Patent Publication No. 4-71636 (1992), and, regarding the diffusion bonding method, a rolling diffusion bonding method was proposed in Japanese Patent Publication No. 6-9749 (1994) filed by the inventors of the present invention.

The former method, i.e. the explosive cladding method (Japanese Patent Publication No. 4-71636) is a method comprising the steps of producing a double pipe by an explosive cladding operation, and then explosive-cladding another metal pipe to this double pipe to obtain a triple clad pipe. There is another method of this kind, in which three kinds of pipes, for example, pipes of Zr, Ta and SUS are fitted one in another in three layers with clearances left theramong, and the resultant product is bonded together by explosive cladding at once to obtain a triple clad pipe. In these explosive cladding methods, a large-scale apparatus and a large place in which the methods are practiced are required, and the productivity becomes low. Since an explosive cladding method is a processing method causing materials to be locally deformed to a considerable degree, the selection of the materials to be combined is limited greatly, and cladding of the materials having greatly different deformation resistances is difficult.

In order to solve the problems in the explosive cladding method, two of the inventors of the present invention proposed the rolling diffusion bonding method (Japanese Patent Publication No. 6-9749). In this rolling diffusion bonding method, a dissimilar metal transition joint of a stainless steel or a nickel-base alloy and a zirconium material or a titanium material is manufactured. Namely, an inner layer member having a circular cross-section and formed out of, for example, a zirconium material or a titanium material is fitted in a tubular outer layer member formed of, for example, a stainless steel or a nickel-base alloy, with a tantalum layer interposed between the inner and outer layer members, to obtain a composite material. The resultant composite material having two fitted layer members is diffusion-bonded by hot rolling to form a diffusion-bonded clad rod. Then, the outer layer member and the tantalum layer are removed at one end portion of the clad rod, and the inner layer member and the tantalum layer are removed at the other end portion of the clad rod to obtain a dissimilar metal transition joint. Since this method is a rolling method, the dissimilar metal transition joint can be manufactured easily with a high productivity. However, in order to manufacture a dissimilar metal transition joint having a large outer diameter, for example, not less than 60 mm, it is difficult in some cases to provide the two layer members with a bonding capability which is substantially equal to that of a dissimilar metal transition joint having a smaller outer diameter.

Namely, when a solid composite material is rolled during the manufacture of a dissimilar metal transition joint having a large outer diameter, the compression stress occurring during a rolling operation is not imparted to a central portion of the inner layer member due to a large sectional area of the inner layer member in comparison with that of the outer layer member. Moreover, when the inner layer member of the composite material is formed out of a metal the deformation resistance of which is lower than that of the outer layer member, the compression stress is not uniformly imparted to the whole of the inner layer member. For these reasons, there are some cases where an excellent bonding capability of the inner and outer layer members is not obtained. Also in a composite material having a hollow inner layer member, the deformation resistance of the inner layer member is lower than that of the outer layer member, so that the compression stress imparted to an interface therebetween lowers. This causes a force for bonding the inner and outer layer members with each other to lower. Under these circumstances, it has been desired that a clad pipe of different materials having increased bonding capability can be manufactured without causing the post-rolling bonding strength of layer members to decrease even when a dissimilar metal transition pipe joint having a large diameter is manufactured.

The present invention has been developed in view of these facts, and an object thereof is to provide a method of manufacturing a large-diameter dissimilar metal transition pipe joint having high bonding capability and bonding strength by fitting outer and inner layer members of a metal pipe having a high deformation resistance around and in the outer surface and inner surface of an intermediate layer member of a metal pipe having a low deformation resistance, and rolling the resultant composite pipe.

The invention according to claim 1 is a method of manufacturing a dissimilar metal transition pipe joint both of axial end portions of which comprise metal pipes formed out of different kinds of metals, characterized in that it comprises the steps of fitting together inner and outer layer members of a metal pipe of a high deformation resistance and an intermediate layer member of a metal pipe of a low deformation resistance with the intermediate layer member interposed between the inner and outer layer members to thereby form a composite pipe; heating the composite pipe; rolling the heated composite pipe at an elongation ratio of 1.05 to 1.25 by using a rotary rolling mill provided with three or four rolls to thereby form a clad pipe; leaving a portion of the outer or inner layer member at one end portion of the clad pipe with the remaining layer members removed; and leaving a portion of the intermediate layer member at the other end portion of the clad pipe with the remaining layer members removed.

The invention according to claim 2 is a method of claim 1 wherein the inner and outer layer members are formed out of a stainless steel or a nickel-base alloy, the intermediate layer member is formed out of aluminum or an aluminum alloy, and the composite pipe is heated to 450 to 620 °C.

The invention according to claim 3 is a method of claim 1 wherein in said step of fitting together inner and outer layer members of a metal pipe of a high deformation resistance and an intermediate layer member of a metal pipe of a low deformation resistance with the intermediate layer member interposed between the inner and outer layer members, with tantalum layers are interposed between the inner and intermediate layer members and between the intermediate and outer layers members to thereby form the composite pipe.

The invention according to claim 4 is a method of claim 3 wherein the inner and outer layer members are formed out of a stainless steel or a nickel-base alloy, the intermediate layer member is formed out of a zirconium material or a titanium material, and the composite pipe is heated to 800 to 1200 °C.

The invention according to claim 5 is a method of claim 1, 2, 3 or 4 wherein the metal pipe of the outer layer member has a ratio of a wall thickness thereof to an outer diameter thereof of not more than 0.08.

In the method of claim 1, the metal pipes of a high deformation resistance are fitted around and in the outer surface and inner surface respectively of the intermediate layer member of the metal pipe of a low deformation resistance. Therefore, the compression stress occurring during the rolling of the composite pipe works not only on the outer surface of the intermediate layer member but also on the inner surface thereof. Since the rotary rolling mill having three or four rolls is used in the pipe rolling operation, additive shearing strain is imparted on the interfaces among the layer members, whereby the bonding capability among the layer members can be improved. Owing to these effects, the behavior of deformation of the intermediate layer member is restricted, and this layer member is deformed cross-sectionally uniformly, the force for bonding the intermediate and outer layer members and the force for bonding the intermediate and inner layer members increasing. If a mandrel is used during the rolling operation, compressing stress the level of which is substantially equal to that of the compression stress imparted to the outer surface of the intermediate layer member can be imparted to the inner surface thereof, so that the bonding capability among the layer members is improved.

The method of claim 2 has, in addition to the feature of the invention of claim 1, the feature that the inner and outer layer members are formed out of a stainless steel or a nickel-base alloy and the intermediate layer member is formed out of aluminum or an aluminum alloy having a deformation resistance lower than that of the stainless steel or nickel-base alloy, whereby the compression stress is imparted to the intermediate layer member from the inner and outer surfaces thereof by the inner and outer layer members which comprise the same kind of metal to improve the bonding capability among the layer members. Since the heating temperature is 450 to 620 °C, the intermediate layer member of aluminum or aluminum alloy is not melted.

The invention of claim 3 is preferable in the case where a combination of metals which produces an intermetallic compound in the bonding interfaces is employed. The production of such an intermetallic compound is undesirable because it is brittle or has a low corrosion resistance. In the invention of claim 3, the three layer members are fitted together with the tantalum layer interposed between the intermediate and the outer layer members and between the intermediate and inner layer members, to thereby prevent the production of the intermetallic compound in the bonding interfaces of the composite pipe. Thus the bonding capability among the layer members in the rolled clad pipe is improved.

The method of claim 4 has, in addition to the feature of the invention of claim 3, the feature that the inner and outer layer members are formed out of a stainless steel or a nickel-base alloy, the intermediate layer member is formed out of the zirconium material or titanium material having a deformation resistance lower than that of the stainless steel or nickel-base alloy, and the tantalum layers are provided in the bonding interfaces of these layer members, whereby the compression stress is imparted to the intermediate layer member from the inner and outer surfaces thereof by the inner and outer layer members which comprise the same kind of metal to improve the bonding capability among the layer members. Since the heating temperature is 800 to 1200 °C, the intermetallic compound of a tantalum-iron or tantalum-nickel material which is brittle or has a low corrosion resistance is not produced in the bonding interfaces of these layer members.

In the method of claim 5, a dissimilar metal transition pipe joint having a higher bonding capability among the layer members and a higher bonding strength of the pipe joint can be manufactured by assembling the composite pipe using the outer layer member having a ratio of the wall thickness thereof with respect to the outer diameter thereof of not more than 0.08.

Preferred embodiments of the invention will now be described, by way of example, with reference to the accompanying drawings, of which;

Fig. 1 is a sectional front elevation of a composite pipe in the first embodiment of the present invention;

Fig. 2 is a partially cutaway view in side elevation of the composite pipe shown in Fig. 1;

Fig. 3 is a schematic diagram showing a rotary rolling mill used in practicing the present invention;

Fig. 4 is a front elevation taken along the line IV-IV in Fig. 3;

Fig. 5 is a side elevation showing an angle of roll-axis's inclination $\beta$ in the rotary rolling mill shown in Fig. 3;

Fig. 6 is a partially sectioned side elevation of a dissimilar metal transition pipe joint manufactured by the first embodiment of the present invention;

Fig. 7 is a sectional front elevation of another composite pipe in the second embodiment of the present invention;

Fig. 8 is a partially cutaway view in side elevation of the composite pipe shown in Fig. 7;

Fig. 9 is a schematic section showing a method of examining the bonding strength, i.e. shearing strength of a transition pipe joint; and

Fig. 10 is front and side elevations showing the shape of a corrosion resistance test specimen for use in examining the corrosion resistance of a transition pipe joint.

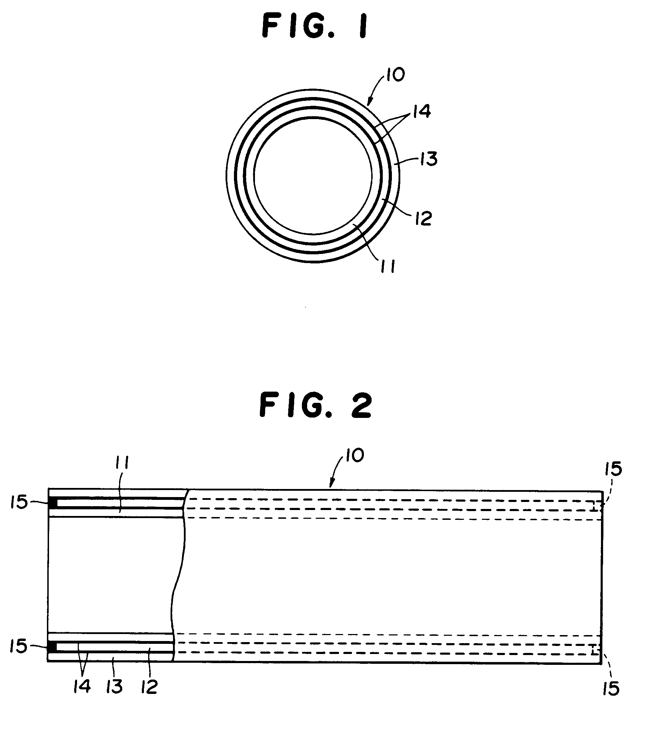

Fig. 1 is a sectional front elevation of a composite pipe and Fig. 2 is a partially cutaway view in side elevation thereof in which a reference numeral 10 denotes an assembled composite pipe formed by fitting layer members together. This assembled composite pipe 10 comprises an inner cylindrical layer member 11 formed out of a stainless steel or a nickel-base alloy, an intermediate cylindrical layer member 12 formed out of a zirconium material or a titanium material and fitted around an outer surface of the inner layer member 11, an outer cylindrical layer member 13 formed out of a stainless steel or a nickel-base alloy and fitted around an outer surface of the intermediate layer member 12, and tantalum layer 14 of Ta foil and interposed between the respective interfaces. Narrow clearances formed between the inner and outer layer members 11, 13 in the assembled composite pipe 10 are made vacuous (not more than 13 Pa ($1 \times 10^{-1}$ Torr)), and an annular lid member 15 is then fitted to each of both end portions of the intermediate layer member 12 in the composite pipe 10 so as to seal the same clearances. The resultant composite pipe 10 is heated in a heating furnace (not shown), and then sent to a rotary rolling mill. The reason why the narrow clearances between the inner and outer layer members 11, 13 are made vacuous is to avoid the production of an oxide in the interfaces of these layer members when the composite pipe 10 is heated.

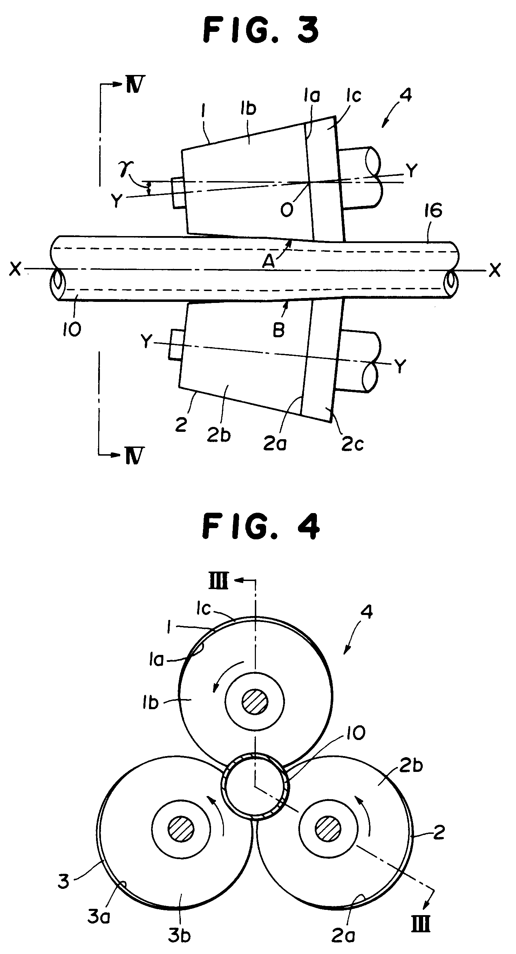

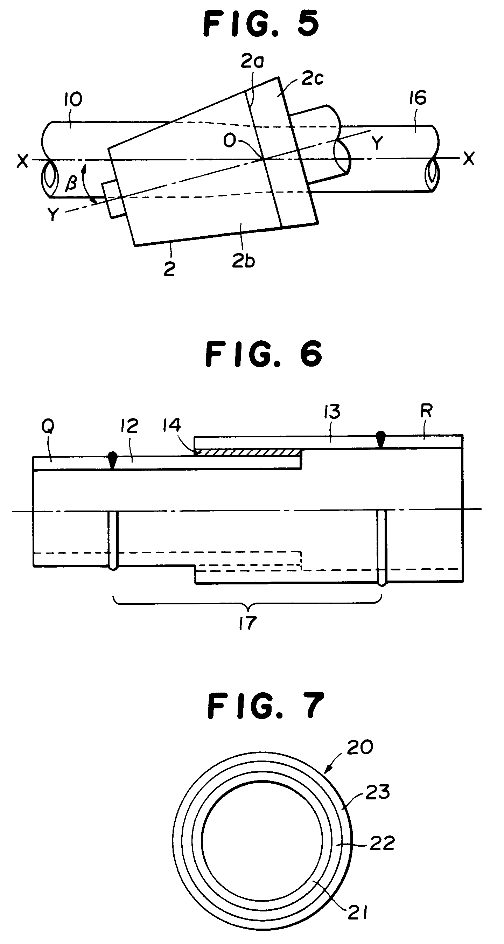

Fig. 3 is a schematic diagram showing a rotary rolling mill used in practicing the present invention, Fig. 4 is a front elevation taken along the line IV-IV in Fig. 3, and Fig. 5 is a side elevation showing an angle of roll-axis's inclination $\beta$ (which will hereinafter be called a feed angle). Fig. 3 is a sectional view taken along the line III-III in Fig. 4. The rotary rolling mill 4 has three conical rolls 1, 2, 3 arranged along and around a pass line X-X. The three rolls 1, 2, 3 are provided with gorges 1a, 2a, 3a in outlet side end portions thereof. Each of these rolls has a gradually decreasing diameter extending from the gorge toward the inlet side end portion of the roll and a gradually increasing diameter extending from the gorge toward the outlet side end portion of the roll. Thus these rolls have frusto-conical inlet surfaces 1b, 2b, 3b and outlet surfaces 1c, 2c, 3c. On the outlet surfaces 1c, 2c, 3c, a distance between them and the pass line is set equal to that between the gorges and the pass line.

All of such conical rolls 1, 2, 3 are arranged so that the inlet surfaces 1b, 2b, 3b thereof are positioned on the upstream side with respect to the direction of movement of the composite pipe 10, and intersections O (which will hereinafter be referred to as roll setting centers) of axes Y-Y and planes including the gorges 1a, 2a, 3a are arranged on the same plane which falls at right angle with the pass line X-X of the composite pipe 10 and spaced at substantially regular intervals around the pass line X-X. The axis Y-Y of each roll 1, 2, 3 crosses the pass line X-X of the composite pipe 10 at a crossed axes angle of $\gamma$ (which will hereinafter be called a cross angle) so as to be inclined with respect to the pass line. Thus, a front end portion of the axis Y-Y approaches the pass line X-X, and the front end portion of the axis Y-Y is inclined at a feed angle $\beta$ to the same side in the circumferential direction of the composite pipe 10 as shown in Figs. 4 and 5. The rolls 1, 2, 3 are connected to a driving power source (not shown) and rotated in the same direction as shown by arrows in Fig. 4. The heated composite pipe 10 pinched among the rolls 1, 2, 3 is moved in its axial direction as it is rotated around the axis thereof. Namely, the composite pipe 10 is helically transferred.

The composite pipe 10 is drawn at an outer surface portion thereof by roll bite portions A as shown in Fig. 3, while it is helically moved by the rolls 1, 2, 3, and pressing surfaces B of the composite pipe 10 is molded frusto-conically, the pipe 10 being then turned into a cylindrical clad pipe 16 having an outer diameter determined by the gorges and outlet surfaces of the rolls. This rotary rolling mill 4 has three rolls as described above, and a rotary rolling mill having four rolls is also operated in the same manner as mentioned above.

In the composite pipe 10 formed by the above-described manufacturing steps, tantalum layers 14 are provided in an interface between the inner and intermediate layer members 11, 12 and in an interface between the intermediate and outer layer members 12, 13. Since tantalum minimizes the production of a noxious intermetallic compound between different metal materials, the provisions of the tantalum layers 14 serves to improve the bonding strength among the layer members and corrosion resistance of the product pipe.

The set conditions for the above-mentioned hot rolling will now be described.

(1) A composite pipe is heated to a temperature in the range from 800°C to 1200°C.
(2) An elongation ratio (length L of the pipe measured after rolling/length $L_0$ thereof measured prior to rolling) is set to 1.05-1.25.

The reasons for having determined these set conditions as mentioned above will be described. First, the reason why the upper limit of the heating temperature is set to 1200°C is that, when the temperature exceeds 1300°C, an intermetallic compound of Ta-Fe or Ta-Ni is formed to cause a composite pipe to be embrittled. The processing heat occurs during a rolling operation in a rotary rolling mill used in the present invention, so that the upper limit of the heating temperature is set to 1200°C taking a temperature rise owing to the processing heat into consideration. The reason why the lower limit of the heating temperature is set to 800°C is to diffusion-bond the layer members at the interfaces thereof during the rolling of the pipe. When this temperature does not reach 800°C, the diffusion bonding of the layer members is adversely affected.

The elongation ratio will now be described. When $L/L_0$ exceeds 1.25, the assembled composite pipe 10 bulges among the rolls 1, 2, 3, and the cross-sectional shape of the pipe 10 being rolled becomes polygonal, i.e., triangular to pentagonal. In addition, a flaring phenomenon occurs, and the rolling of the composite pipe becomes impossible. When $L/L_0$ is lower than 1.05, the bonding capability and bonding strength of the interfaces of a clad pipe 16 decrease.

The reasons why a rotary rolling method, not a groove rolling method, is used as a hot rolling method in the present invention will be described. A groove rolling method for pipes is a method of carrying out a multi-pass rolling operation by properly arranged rolls having oval or round grooves, and the cross-sectional shape of the pipe being pressed in each pass becomes non-circular. Therefore, when a composite pipe formed by layer members of extremely different deformation resistances is rolled using the groove rolling method, an intermediate layer member stretches in the rolling direction, and the inner and outer layer members are deformed in the direction perpendicular to the rolling direction. Consequently, clearances occur between the inner and outer layer members and intermediate layer member of the pipe in each pass, and a clad pipe in which the layer members are perfectly bonded together cannot be obtained.

For the above reasons, the present invention employs a rotary rolling method, an axially symmetrical processing method, by which the composite pipe 10 is subjected to rotary rolling so that the bonding strength of the layer members, which is insufficiently low in a pipe obtained by a conventional groove rolling method, can be increased to a satisfactorily high level. As a result, diffusion is promoted on the interfaces of the metals of the composite pipe 10 heated to 800 to 1200°C, and the diffusion bonding of the layer members becomes possible. Even when a small amount of intermetallic compound is formed by this hot rotary rolling operation, the thickness of the layers of the intermetallic compound is reduced owing to the circumferential shearing strain exerted on the bonding interfaces of the layer members, so that a clad pipe 16 having a high layer member bonding capability can be manufactured.

The reason why a rotary rolling mill having three or four conical rolls is used resides in that, when a rotary rolling mill having two rolls is used, the cross-sectional shape of a composite pipe 10 becomes elliptic, and retaining a circular cross-sectional shape during a rolling operation becomes difficult. In a rotary rolling mill having not less than five rolls, it is difficult for the mechanical designing of the machine to select the bearings to be provided in a roll-retaining chock portion, so that such a rolling mill is not practical.

The rolling of a composite pipe 10 by using a rotary rolling mill with three of four rolls may be done with the pipe 10 supported on mandrel inserted in the hollow thereof. In this case, the outer diameter of the mandrel is preferably set a little larger, for example, 1-3 mm larger than the inner diameter of a clad pipe 16 which has been rolled without using a mandrel.

From clad pipe 16 manufactured in this manner, the whole length of an inner layer member 11 is removed. At one end portion of this clad pipe, all layer members except an intermediate layer member 12 are removed, and, at the other end portion thereof, all layer members except an outer layer member 13 are removed, to form a dissimilar metal transition pipe joint 17 as shown in Fig. 6. Both end portions of the dissimilar metal transition pipe joint 17 thus formed and two pipes Q, R of different materials are abutted at the layer members of the same material against each other, and welded. Namely, for example, an outer layer member 13 of SUS of the dissimilar metal transition pipe joint 17 and a right-side pipe R formed out of SUS are welded, and an intermediate pipe member 12 of Zr of the transition pipe joint 17 and a left-side pipe Q formed out of Zr.

By welding two pipes Q, R of different materials to the members of the corresponding materials of the transition pipe joint 17 at the abutted end portions thereof, a pipe Q of a zirconium material or a titanium material and a pipe R of a stainless steel or a nickel-base alloy can be connected together by a dissimilar metal transition pipe joint 17. In the above embodiment, a dissimilar metal transition pipe joint formed out of a stainless steel or a nickel-base alloy and a zirconium material or a titanium material is described, and this transition pipe joint can also be manufactured even when pure aluminum or an aluminum alloy is used instead of the zirconium material or titanium material. A dissimilar metal transition pipe joint using pure aluminum or an aluminum alloy will now be described below.

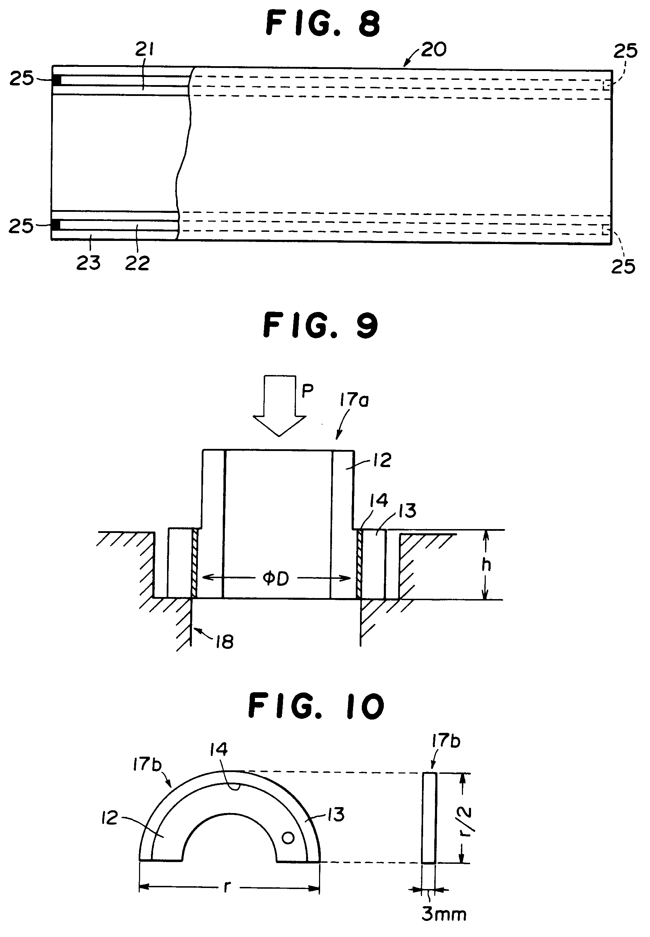

Fig. 7 is a sectioned front elevation of composite pipe in the second embodiment of the present invention, and Fig. 8 is a partially cutaway view in side elevation thereof, in which figures a reference numeral 20 denotes an assembled composite pipe. The composite pipe 20 is formed by fitting a cylindrical intermediate layer member 22 of pure aluminum or an aluminum alloy around an outer surface of a cylindrical inner layer member 21 of a stainless steel or a nickel-base alloy, and then a cylindrical outer layer member 23 of a stainless steel or a nickel-base alloy around an outer surface of the intermediate layer member 22. Although Ta layers are interposed between the cylindrical layer members in the previously-described first embodiment of Fig. 1 using a zirconium material or a titanium material, it is not necessary to interpose Ta layers between the layer members of the second embodiment of Fig. 7, since the material such as pure aluminum or an aluminum alloy does not cause an intermetallic compound, which gives rise to imperfect bonding of layer members, to produce in the surface to be bonded with the material such as a stainless steel or a nickel-base alloy.

Such a composite pipe 20 is sealed at both ends thereof with annular lid members 25, 25 after narrow clearances formed between the inner and outer layer members 21, 23 have been made vacuous (not more than 13 Pa ($1 \times 10^{-1}$ Torr)), and the pipe 20 is then heated in a heating furnace (not shown), and the heated pipe is sent to a rotary rolling mill. The set conditions for a hot rolling operation to be conducted will be described below.

(1) A composite pipe is heated to a temperature in the range from 450°C to 620°C.
(2) An elongation ratio (length L of the pipe measured after rolling/length $L_0$ thereof measured prior to rolling) is set to 1.05-1.25.

The reason why the upper limit of the heating temperature is set to 620°C is that, when the temperature exceeds 660°C, the aluminum is melted. Since processing heat occurs during a rolling operation in a rotary rolling mill used in the present invention, the upper limit of the heating temperature is set to 620°C taking a temperature rise owing to the processing heat into consideration. The reason why the lower limit of the heating temperature is set to 450°C is to diffusion-bond the layer members at the interfaces thereof during the rolling of the pipe. When this temperature does not reach 450°C, the diffusion bonding of the layer members cannot be done satisfactorily.

The composite pipe 20 thus heated is rolled by using a rotary rolling mill shown in Figs. 3 to 5. The composite pipe is drawn at its outer surface while it is helically moved by the rolls 1, 2, 3, and turned into a cylindrical clad pipe of a predetermined outer diameter at the gorge portions and outlet surfaces. The same rotary rolling mill and rolling condition as with the first embodiment are available also in the second embodiment, so that their explanations are omitted.

From a clad pipe thus manufactured, the whole length of inner layer member 21 is removed. At one end portion of this clad pipe, all layer members except an intermediate layer member 22 are removed, and, at the other end portion thereof, all layer members except an outer layer member 23 are removed, to form a dissimilar metal transition pipe joint. Accordingly, by using this dissimilar metal transition pipe joint, a pipe of a stainless steel or a nickel-base alloy and a pipe of pure aluminum or an aluminum alloy can be connected.

Manufacturing Example:

Transition pipe joint samples were manufactured using the following materials and operations.

[Example 1]

Outer layer member 13:

a pipe of SUS 304L, 97.3 mm in outer diameter × 87.0 mm in inner diameter × 300 mm in length, t(wall thickness)/D(outer diameter) = 0.053

Intermediate layer member 12:

a pipe of Pure Zr, 86.4 mm in outer diameter × 76.1 mm in inner diameter × 290 mm in length, t/D = 0.06

Inner layer member 11:

a pipe of SUS 304, 75.5 mm in outer diameter × 65.2 mm in inner diameter × 300 mm in length, t/D = 0.068

Tantalum layer 14:

a foil of Pure Ta, 0.1 mm in thickness × 100 mm in width

[Example 2]

Outer layer member 13:

a pipe of SUS 304L, 97.3 mm in outer diameter × 87.0 mm in inner diameter × 300 mm in length, t/D = 0.053

Intermediate layer member 12:

a pipe of Ti-5%Ta, 86.4 mm in outer diameter × 76.1 mm in inner diameter × 290 mm in length, t/D = 0.06

Inner layer member 11:

a pipe of SUS 304, 75.5 mm in outer diameter × 65.2 mm in inner diameter × 300 mm in length, t/D = 0.068

Tantalum layer 14:

a foil of Pure Ta, 0.1 mm in thickness × 100 mm in width

The components of the materials described in Examples 1 and 2 are shown in Tables 1 and 2.

Table 1

| Material | C | Si | Mn | P | S | Ni | Cr |
|---|---|---|---|---|---|---|---|
| SUS 304L | 0.015 | 0.51 | 1.52 | 0.027 | 0.004 | 10.83 | 18.25 |
| SUS 304 | 0.04 | 0.48 | 1.50 | 0.030 | 0.005 | 11.0 | 18.15 |

Table 2

| Material | C | Fe+Cr | Ta | O | N | H | Hf | Ti |
|---|---|---|---|---|---|---|---|---|
| Pure Zr | 0.003 | 0.146 | - | 0.123 | 0.0017 | 0.0003 | 0.0048 | rest |
| Ti-5%Ta alloy | 0.006 | 0.026 | 4.63 | 0.081 | 0.005 | 0.0008 | - | rest |
| Material | Al | | | Mg | Cr | | | |
| Pure Al (1050) | Not less than 99.5 | | | - | - | | | |
| Al alloy (5052) | rest | | | 2.5 | 0.25 | | | |

By using the materials described in Examples 1 and 2, composite pipe 10 were manufactured in accordance with the following method. An inner layer member 11, an intermediate layer member 12, an outer layer member 13 and a tantalum layer 14 were degreased and washed, and the tantalum layer 14 was then wound around the inner layer member 11, and the resultant product is inserted into the intermediate layer member 12. The tantalum layer 14 was then wound around the intermediate layer member 12, and the resultant product was inserted into the outer layer member 13. Both end portions of the composite pipe thus obtained were sealed with stepped annular lid members 15, 15 (Fig. 2) in a vacuous condition of 0,4 Pa ($3 \times 10^{-3}$ Torr) with an electron beam, and then subjected to seal-welding. The annular lid members 15 were formed out of the same material as the intermediate layer member 12.

[Example 3]

Outer layer member 23:

a pipe of SUS 304L, 97.3 mm in outer diameter × 87.0 mm in inner diameter × 300 mm in length, $t/D = 0.053$

Intermediate layer member 22:

a pipe of Pure Al, 86.4 mm in outer diameter × 76.1 mm in inner diameter × 290 mm in length, $t/D = 0.06$

Inner layer member 21:

a pipe of SUS 304, 75.5 mm in outer diameter × 65.2 mm in inner diameter × 300 mm in length, $t/D = 0.068$

[Example 4]

Outer layer member 23:

a pipe of SUS 304L, 97.3 mm in outer diameter × 87.0 mm in inner diameter × 300 mm in length, $t/D = 0.053$

Intermediate layer member 22:

a pipe of Aluminum alloy 5052, 86.4 mm in outer diameter × 76.1 mm in inner diameter × 290 mm in length, $t/D = 0.06$

Inner layer member 21:

a pipe of SUS 304, 75.5 mm in outer diameter × 65.2 mm in inner diameter × 300 mm in length, $t/D = 0.068$

The components of the materials described in Example 3 and 4 are shown in Table 1 and 2.

By using the materials described in Examples 3 and 4, composite pipes were manufactured in accordance with the following method. An inner layer member 21, an intermediate layer member 22 and an outer layer member 23 were degreased and washed. The inner layer member 21 was then inserted in the intermediate layer member 22, and the resultant product in the outer layer member 23. Both end portions of the composite pipe thus obtained were sealed with stepped annular lid members 25, 25 (Fig. 8) in a vacuous condition of 0,4 Pa ($3 \times 10^{-3}$ Torr) with an electron beam, and then subjected to seal-welding. The annular lid members 25 were formed out of the same material as the intermediate layer member 22.

The composite pipes thus manufactured using the materials in Examples 1 to 4 were heated and subjected to rotary rolling to obtain clad pipes. The rolling conditions used in this operation include:

cross angle ($\gamma$): 3°,
feed angle ($\beta$): 9°,
diameter of roll: 210 mm,
number of revolutions per minute of roll : 50 rpm,
mandrel: 52 mm in diameter, if used.

The rolling operations were carried out at a heating temperature of 900° in Examples 1, and 2, and at 550°C in Examples 3 and 4. The pipes were rolled at various elongation ratios as shown in the rolling pass schedules a-f, in Table 3.

Table 3

| Symbol | Pass schedule | Mandrel | Elongation ratio |
|---|---|---|---|
| a | 97.3$\phi$ → 92.7$\phi$ | not used | 1.02 |
| b | 97.3$\phi$ → 86.0$\phi$ | not used | 1.05 |
| c | 97.3$\phi$ → 81.5$\phi$ | not used | 1.25 |
| d | 97.3$\phi$ → 80.0$\phi$ | not used | 1.30 |
| e | 97.3$\phi$ → 87.6$\phi$ | used | 1.10 |
| f | 97.3$\phi$ → 86.4$\phi$ | used | 1.20 |

From each of the clad pipes manufactured using the materials in Examples 1 to 4, the whole length of the inner layer member 11 and tantalum layer (in Examples 1 and 2) or the whole length of the inner layer member 21 ( in Examples 3 and 4) were removed. The outer layer member 13 or 23 alone was left at one end portions of the pipe, and the intermediate layer member 12 or 22 alone was left at the other end portion of the pipe, to thereby obtain transition pipe joint samples.

Determination of bonding strength:

The bonding strength, i.e. shearing strength of the transition pipe joint samples was determined by a method schematically shown in Fig. 9 in which a transition pipe joint sample manufactured using the materials in Example 1 is exemplarily illustrated. A specimen 17a is obtained by cutting the length of the outer layer member 13 of the transition pipe joint 17 to a predetermined length h, and reducing the outer diameter of the intermediate layer member 12 to a level slightly smaller than that of its original diameter D. Two specimens are prepared with respect to each pipe joint sample. A support member 18, which is provided with a circular opening having the diameter slightly larger than the outer diameter D of the intermediate layer member 12, is disposed so that an end portion of the outer layer member 13 engages an edge portion of the opening of the support member 18. A pressing force is then applied to the specimen 17a from the top side of the intermediate layer member 12 to measure a load P which causes the intermediate and outer layer members 12, 13 to be broken. The measured value of the load P is substituted for P in the equation (I) to calculate a shearing strength. The results obtained for two specimens for each pipe joint sample are shown in Table 4.

$$\text{Shearing strength} = P/( \pi \times D \times h) \tag{I}$$

Table 4

| Symbol | Shearing strength (N/mm$^2$) | | | | | | | |
|---|---|---|---|---|---|---|---|---|
| | SUS 304L/Zr | | SUS 304L/Ti-5%Ta | | SUS 304L/Al(1050) | | SUS 304L/Al alloy (5052) | |
| a | 152 | 161 | 148 | 154 | 30.5 | 32.4 | 60.2 | 68.5 |
| b | 279 | 292 | 281 | 295 | 61.8 | 64.5 | 140 | 143 |
| c | 323 | 331 | 314 | 338 | 62.5 | 68.0 | 156 | 159 |
| d | not rollable | | not rollable | | not rollable | | not rollable | |
| e | 302 | 318 | 296 | 307 | 62.3 | 65.3 | 145 | 151 |
| f | 322 | 335 | 313 | 328 | 63.1 | 67.7 | 149 | 156 |

From the results shown in Table 4, it is understood that, with respect to all pipe joint samples, specimens d in which the elongation ratio is in excess of 1.25 are unable to be rolled. It is also understood that, in the specimens a in which the elongation ratio is 1.02, the shearing strength becomes extremely low as compared with those of the specimens b in which the elongation ratio is 1.05. Accordingly, it can be said that, in order to manufacture a dissimilar metal transition pipe joint having a high bonding strength, the elongation ratio is preferably set to not lower than 1.05 and not higher than 1.25.

Determination of bonding ratio in bonded interface:

From the clad pipes manufactured using the materials in Examples 1 to 4 and in accordance with the pass schedules shown in Table 3, the inner layer member 11 or 21 was removed to prepare specimens of double layered clad pipe of a predetermined length. These specimens were subjected to an ultrasonic flaw detecting test to determine a bonding ratio in the bonded interface. The flaw detecting conditions are as follows.

Flaw Detector:   HISI (manufactured by Japan Krautkramer Bronson K.K.)
Probe:   V377 (manufactured by Panametrics K.K.)

Indicating method:

Frequency: 30 MHz
Diameter of vibrator: 0.25 in.
Focal distance: 5,08 cm (2 in.) in water.

The whole surface of each clad pipe sample was subjected to measurement. The results show that the specimen a had the bonding ratio in the bonded interface of 70-90%, and that the specimens b, c, e and f had the bonding ratio in the bonded interface of 100%. Therefore, it can be said that, in order to manufacture a dissimilar metal transition pipe joint having a high bonding ratio, the elongation ratio is preferably set to not lower than 1.05 and not higher than 1.25.

Relationship between t (wall thickness) and D (outer diameter) of outer layer member:

Transition pipe joint samples were manufactured in the same manner as described above using the materials of Examples 1 to 4 except that outer layer members of various outer diameter as described in the following Examples 5 to 8 were used. The rolling conditions for these transition pipe joint samples include an elongation ratio of 1.20 with a mandrel used.

[Example 5]

Outer layer member:

a pipe of SUS 304L, 100 mm in outer diameter × 87.0 mm in inner diameter × 300 mm in length, $t/D = 0.065$

[Example 6]

Outer layer member:

a pipe of SUS 304L, 103 mm in outer diameter × 87.0 mm in inner diameter × 300 mm in length, $t/D = 0.078$

[Example 7]

Outer layer member:

a pipe of SUS 304L, 106 mm in outer diameter × 87.0 mm in inner diameter × 300 mm in length, $t/D = 0.090$

[Example 8]

Outer layer member:

a pipe of SUS 304L, 108 mm in outer diameter × 87.0 mm in inner diameter × 300 mm in length, $t/D = 0.097$

As a result, all samples in which pure Zr, Ti-5%Ta, pure aluminum or an aluminum alloy were used for the intermediate layer members in Example 7 having $t/D = 0.090$ and Example 8 having $t/D = 0.097$ were found to have a small number of unbonded portions between the outer and intermediate layer members. In Example 5 having $t/D = 0.065$ and Example 6 having t/D = 0.078, unbonded portions did not occur, and the shearing strength of bonded interfaces was substantially equal to that of the specimens f in Table 4. Therefore, it can be said that excellent rolling operations could be carried out in Examples 5 and 6. In view of these facts, it is understood that, in order to manufacture a dissimilar metal transition pipe joint having a high bonding surface ratio and a high bonding strength, the ratio of the wall thickness t to the outer diameter D of the outer layer member of the composite pipe is preferably set to not higher than 0.08.

Examination of corrosion resistance:

In order to examine the corrosion resistance of the transition pipe joint samples of Examples 1 and 2, semi-circular corrosion test specimen 17b of 3 mm in width shown in Fig. 10 was prepared by cutting the bonded portion of the pipe joint sample along a plane perpendicular to the rolling direction. A reference letter r in Fig. 10 denotes the diameter of the pipe joint sample. A dissimilar metal transition pipe joint in which a tantalum layer 14 is not provided was manufactured as a comparative example of Examples 1 and 2, and a corrosion test specimen was prepared in the same manner as mentioned above.

The measurement of the corrosion resistance of the specimens was conducted as follows. A corrosion resistance test liquid shown below was heated, and corrosion resistance test specimens 17b were immersed in the test liquid which had reached its boiling point, and kept immersed for 120 hours. The corrosion depth of the bonded interfaces was then measured by a cutting microscopic method (500 magnifications).

Corrosion Test Liquid:

8M $HNO_3$ containing $Ru^{3+}$ 1 mg/l
$Ce^{3+}$ 0.5 mg/l
$Fe^{3+}$ 200 mg/l
$Cr^{3+}$ 50 mg/l
$Ni^{2+}$ 50 mg/l.

The results obtained are shown in Table 5.

Table 5

| Combination of materials | Use of Ta foil | Rolling conditions | Corrosion depth (µm) | |
|---|---|---|---|---|
| SUS 304L/Zr | used | e | 0, | 0 |
| | not used | e | 400, | 72000 |
| SUS 304L/Ti-5%Ta | used | e | 0, | 0 |
| | not used | e | 350, | 71800 |

It is understood from the results shown in Table 5 that corrosion occurs in the bonded interfaces in the corrosion resistance test specimens in which a tantalum layer 14 is not provided, and that corrosion does not occur in the bonded interfaces of the corrosion resistance test specimens of Examples 1 and 2 in which tantalum layers 14 are provided. Accordingly, it can be said that the corrosion resistance of a bonded surfaces of a transition pipe joint manufactured by using a stainless steel or a nickel-base alloy and a zirconium material or a titanium material can be improved by interposing a tantalum layer between the surfaces to be bonded.

In the above-described embodiments, the inner layer member 11 or 21 is removed with respect to the whole length of the rolled clad pipe, but the present invention is not limited to such a transition pipe joint. A dissimilar metal transition pipe joint one end portion of which comprises the intermediate layer member 12 or 22, and the other end portion of which comprises the inner layer member 11 or 21 may also be manufactured by removing the outer layer member 13 or 23 with respect to the whole length of the clad pipe.

As being apparent from the foregoing, according to the present invention, an outer layer member, an intermediate layer member the deformation resistance of which is lower than that of the outer layer member, and an inner layer member comprising the same kind of metal as the outer layer member are fitted in order, and bonded with one another by rolling. Therefore, the outer and inner surfaces of the intermediate layer member can be bonded excellently with the outer and inner layer members by uniformly deforming the intermediate layer member, and a dissimilar metal transition pipe joint of a large diameter having a high bonding strength can be manufactured.

**Claims**

1. A method of manufacturing a dissimilar metal transition pipe joint (17) both axial end portions of which comprise metal pipes formed out of different kinds of metals, comprising the steps of

   fitting together inner (11) and outer (13) layer members of a metal pipe of a high deformation resistance and an intermediate layer member (12) of a metal pipe of a low deformation resistance with said intermediate layer member (12) interposed between said inner and outer layer members (11, 13) to thereby form a composite pipe (10);
   heating said composite pipe (10);
   rolling the heated composite pipe (10) at an elongation ratio of 1.05 to 1.25 by using a rotary rolling mill (4) provided with three or four rolls (1-3) to thereby form a clad pipe (16);
   leaving a portion of said outer (13) or inner (11) layer member at one end portion of said clad pipe (16) with the remaining layer members removed; and
   leaving a portion of said intermediate layer member (12) at the other end portion of said clad pipe (16) with the remaining layer members removed.

2. A method of manufacturing a dissimilar metal transition pipe joint (17) according to claim 1, wherein said inner and outer layer members (11, 13) are formed out of a stainless steel or a nickel-base alloy, said intermediate layer member (12) is formed out of aluminum or an aluminum alloy, and said composite pipe (10) is heated to 450 to 620 °C.

3. A method of manufacturing a dissimilar metal transition pipe joint (17) according to claim 1, wherein in said step of

   fitting together inner and outer layer members (11, 13) of a metal pipe of a high deformation resistance and an intermediate layer member (12) of a metal pipe of a low deformation resistance with said intermediate layer member (12) interposed between said inner and outer layer members (11, 13), tantalum layers (14) are interposed between said inner (11) and intermediate (12) layer members and between said intermediate (12) and outer (13) layer members to thereby form said composite pipe (10).

4. A method of manufacturing a dissimilar metal transition pipe joint (17) according to claim 3, wherein said inner and outer layer members (11, 13) are formed out of a stainless steel or a nickel-base alloy, said intermediate layer member (12) is formed out of a zirconium material or a titanium material, and said composite pipe is heated to 800 to 1200 °C.

5. A method of manufacturing a dissimilar metal transition pipe joint (17) according to claim 1, 2, 3 or 4, wherein said metal pipe of said outer layer member (13) has a ratio of a wall thickness thereof to an outer diameter thereof of not more than 0.08.

**Patentansprüche**

1. Ein Verfahren zur Herstellung einer Übergangsrohrverbindung (17) aus ungleichartigen Metallen, bei der die beiden axialen Endbereiche aus verschiedenen Metallarten gebildete Metallrohre umfassen, und zwar erstreckt sich das besagte Verfahren auf die Schritte

   des Zusammensetzens innerer (11) und äußerer (13) Schichtelemente aus einem einen hohen Verformungswiderstand aufweisenden Metallrohr mit einem Zwischenschichtelement (12) aus einem einem niedrigen Verformungswiederstand aufweisenden Metallrohr, wobei das besagte Zwischenschichtelement (12) zwischen den besagten inneren und äußeren Schichtelementen (11, 13) eingefügt wird, um dadurch ein Verbundrohr (10) zu bilden;
   des Erhitzens des besagten Verbundrohrs (10);
   des Walzens des erhitzten Verbundrohrs (10) bei einem Dehnungsverhältnis von 1,05 bis 1,25 mit Hilfe eines drei bzw. vier Walzen (1 - 3) umfassenden Umlaufwalzwerks, um dadurch ein plattiertes Rohr (16) zu bilden;
   des Belassens eines Abschnitts des besagten äußeren Schichtelements (13) bzw. des besagten inneren Schichtelements (11) in einem Endbereich des besagten plattierten Rohres (16), von dem die restlichen Schichtelemente entfernt wurden; und
   des Belassens eines Abschnitts des besagten Zwischenschichtelements (12) in dem anderen Endbereich des besagten plattierten Rohres (16), von dem die restlichen Schichtelemente entfernt wurden.

2. Ein Verfahren nach Anspruch 1 zur Herstellung einer Übergangsrohrverbindung (17) aus ungleichartigen Metallen, bei dem die besagten inneren und äußeren Schichtelemente (11, 13) aus einem rostfreien Stahl oder einer auf Nikkel basierenden Legierung gebildet werden, während das besagte Zwischenschichtelement (12) aus Aluminium oder einer Aluminiumlegierung gebildet wird, und bei dem das besagte Verbundrohr (10) auf 450 bis 620 °C erhitzt wird.

3. Ein Verfahren nach Anspruch 1 zur Herstellung einer Übergangsrohrverbindung (17) aus ungleichartigen Metallen, bei dem bei dem besagten Schritt

des Zusammensetzens innerer und äußerer Schichtelemente (11, 13) aus einem einen hohen Verformungswiderstand aufweisenden Metallrohr mit einem Zwischenschichtelement (12) aus einem einen niedrigen Verformungswiderstand aufweisenden Metallrohr, wobei das besagte Zwischenschichtelement (12) zwischen den besagten inneren und äußeren Schichtelementen (11, 13) eingefügt ist, zwischen dem besagten inneren Schichtelement (11) und dem besagten Zwischenschichtelement (12) und zwischen dem besagten Schichtelement (12) und dem besagten äußeren Schichtelement (13) Tantalschichten (14) eingefügt werden, um dadurch das besagte Verbundrohr (10) zu bilden.

4. Ein Verfahren nach Anspruch 3 zur Herstellung einer Übergangsrohrverbindung (17) aus ungleichartigen Metallen, bei dem die besagten inneren und äußeren Schichtelemente (11, 13) aus einem rostfreien Stahl bzw. einer auf Nikkel basierenden Legierung gebildet werden, während das besagte Zwischenschichtelement (12) aus einem Zirkonwerkstoff oder einem Titanwerkstoff gebildet wird, und bei dem das besagte Verbundrohr auf 800 bis 1 200 °C erhitzt wird.

5. Ein Verfahren nach Anspruch 1, 2, 3 oder 4 zur Herstellung einer Übergangsrohrverbindung (17) aus ungleichartigen Metallen, bei dem das Verhältnis der Wandstärke des besagten Metallrohrs des besagten äußeren Schichtelements (13) zu einem Außendurchmesser des besagten Metallrohrs 0,08 nicht überschreitet.

**Revendications**

1. Procédé de fabrication d'un joint de transition (17) entre tubes de métaux différents dont les parties d'extrémités axiales sont constituées de tubes métalliques réalisés en métaux de types différents, comprenant les étapes suivantes :

assemblage des éléments de couches intérieure (11) et extérieure (13) d'un tube de métal à haute résistance à la déformation et un élément de couche intermédiaire (12) d'un tube de métal à faible résistance à la déformation, ledit élément de couche intermédiaire (12) étant interposé entre lesdits éléments de couches intérieure et extérieure (11, 13) pour former ainsi un tube composite (10);
chauffage dudit tube composite (10);
laminage du tube composite chauffé (10) à un rapport d'allongement de 1,05 à 1,25 au moyen d'un laminoir rotatif (4) muni de trois ou quatre rouleaux (1-3) pour former ainsi un tube gainé (14);
conservation d'une partie dudit élément de couche extérieure (13) ou intérieure (11) à une partie d'extrémité dudit tube gainé (16) après enlèvement des éléments de couches restants; et
conservation d'une partie dudit élément de couche intermédiaire (12) à l'autre partie d'extrémité dudit tube gainé (16) après enlèvement des éléments de couches restants.

2. Procédé de fabrication d'un joint de transition entre tubes de métaux différents (17) selon la revendication 1, dans lequel lesdits éléments de couches intérieure et extérieure (11, 13) sont réalisées en acier inoxydable ou en alliage à base de nickel, ledit élément de couche intermédiaire (12) est réalisé en aluminium ou en alliage d'aluminium, et ledit tube composite (10) est chauffé à 450 - 620°C.

3. Procédé de fabrication d'un joint de transition entre tubes de métaux différents (17) selon la revendication 1, dans lequel, dans ladite étape d'assemblage des éléments de couches intérieure et extérieure (11, 13) d'un tube de métal à haute résistance à la déformation et d'un élément de couche intermédiaire (12) d'un tube métallique à faible résistance à la déformation avec interposition dudit élément de couche intermédiaire (12) entre lesdits éléments de couches intérieure et extérieure (11, 13), des couches de tantale (14) sont interposées entre lesdits éléments de couches intérieure (11) et intermédiaire (12) et entre lesdits éléments de couches intermédiaire (12) et extérieure (13) pour former ainsi ledit tube composite (10).

4. Procédé de fabrication d'un joint de transition entre tubes de métaux différents (17) selon la revendication 3, dans lequel lesdits éléments de couches intérieure et extérieure (11, 13) sont réalisés en acier inoxydable ou en alliage à base de nickel, ledit élément de couche intermédiaire (12) est réalisé en zirconium ou en titane, et ledit tube composite est chauffé à 800 - 1200°C.

5. Procédé de fabrication d'un joint de transition entre tubes de métaux différents (17) selon la revendication 1, 2, 3 ou 4, dans lequel ledit tube métallique dudit élément de couche extérieure (13) a un rapport de son épaisseur de paroi à son diamètre extérieur ne dépassant pas 0,08.

# FIG. 1

# FIG. 2

# F I G. 3

# F I G. 4

# FIG. 5

# FIG. 6

# FIG. 7

# FIG. 8

# FIG. 9

# FIG. 10